# EUROPEAN PATENT APPLICATION

(11) **EP 4 461 836 A1**
(43) Date of publication of application: **13.11.2024**
(21) Application number: 22918509.5
(22) Date of filing: 30.12.2022
(51) Int. Cl.: C22B 60/02, C22B 7/00, C22B 3/40

(54) **TRIVALENT ACTINIDES AND LANTHANIDES, AND TRIVALENT ACTINIDE INTEGRATED EXTRACTION AND SEPARATION METHOD AND SYSTEM**

(30) Priority: 04.01.2022 CN 202210003279
(71) Applicant: China Institute of Atomic Energy, Beijing 102413 (CN)
(72) Inventor: ZHU, Liyang, Beijing 102413 (CN); FANG, Tuo, Beijing 102413 (CN); GUO, Qiling, Beijing 102413 (CN); HAO, Xuan, Beijing 102413 (CN); LIU, Qian, Beijing 102413 (CN); ZHOU, Jin, Beijing 102413 (CN); YANG, Suliang, Beijing 102413 (CN); TIAN, Guoxin, Beijing 102413 (CN)
(74) Representative: Global IP Europe Patentanwaltskanzlei
(86) International application number: PCT/CN2022/143836
(87) International publication number: WO 2023/131068

(57) **Abstract**

The invention relates to an integrated method for trivalent actinides and lanthanides separation and trivalent actinides mutual separation, which comprises: adjusting the pH value of a solution containing trivalent lanthanide and actinide ions to an appropriate value, wherein the actinide ions include americium ions and curium ions; adding an aqueous phase complexing agent, the solution is contacted with the organic phase of an extractant containing alkyl or aryl dithiophosphonic acid and nitrogen containing reagents, and actinides is extracted into the organic phase. The loaded organic phase containing actinide ions was washed by an aqueous phase with a certain pH value. The loaded organic phase is stripped with an aqueous phase of a certain pH value, and the curium ion is stripped into the aqueous phase to achieve the separation of americium and curium. The organic phase is then contacted with dilute nitric acid solution, and the americium ion in the organic phase is stripped into the aqueous phase. The invention can significantly improve the separation factor of americium and curium and reduce the operating pH value. And within the same system, the separation of trivalent actinides and trivalent lanthanides, as well as the mutual separation of trivalent actinides can be realized simultaneously through extraction and stepwise stripping, simplifying the separation process and improving separation efficiency.

## Description

### FIELD OF INVENTION

The present invention belongs to the separation technology of elements in solution, and specifically relates to an integrated method and system for trivalent actinides and lanthanides separation and trivalent actinides mutual separation.

### BACKGROUND OF THE INVENTION

The production of transplutonium isotopes such as californium-252, the extraction of valuable transplutonium elements like americium and curium from high-level waste (HLW), and the "Partitioning and Transmutation" treatment of high-level radioactive waste all involve the separation of trivalent actinides from lanthanides, as well as the mutual separation of trivalent actinides. For decades, the research on related separation technology and separation system has been one of the key focuses in nuclear chemical engineering and actinide chemistry. Since both lanthanides and actinides belong to f-block elements, the oxidation state of all lanthanide ions and actinide ions after americium in aqueous solution is +3 valence, bearing similar chemical properties. Especially, the ion radii difference between trivalent actinides such as americium, curium, berkelium, californium, etc. is very small, which makes it difficult to separate them from each other.

For decades, many chemical processes for the separation of trivalent actinides and lanthanides have been developed internationally. These processes generally rely on the principle that trivalent actinide ions have stronger covalency in their 5f orbitals compared to the 4f orbitals of lanthanide ions, and utilize the "Hard and Soft Acids and Bases (HSAB)" Principle for separation. Use "soft" ligands with coordination atoms of N or S, or use them as extractants in the organic phase to preferentially extract trivalent actinides into the organic phase, while leaving trivalent lanthanides in the aqueous phase, such as the dithiophosphinic acid extraction system developed by Tsinghua University in China, and the nitrogen-containing triazine-pyridine-based ligands system developed in Europe. Dithiophosphinic acid extractants have excellent separation ability for trivalent lanthanides and actinides, and its feaibility has been validated by "hot test" experiment in China. However, the separation factor for separating trivalent americium and curium with this type of extractant is not high, about 3, and there are problems such as the high operating pH value will make the process control difficult, and the stability of currently used alkyl dithiophosphinic acid is sensitive to oxygen and irradiation, further hinder its industrial application. Alternatively, "soft" water soluble ligands (such as amino polycarboxylic acid) can be used as complexing agents to keep trivalent actinides ions in the aqueous phase, while "hard" ligands can be used as extractants to extract trivalent lanthanides into the organic phase, such as the HDEHP-DTPA system developed in the United States.

For the mutual separation of trivalent americium and curium, the oxidation method or solvent extraction method of americium is mainly used to separate americium and curium. When separating americium and curium by oxidation method, trivalent americium is firstly oxidized to a high valence state, and then the high valence state americium and trivalent curium are separated. However, it is difficult to oxidize americium to a high valence state, the available oxidizing agents are limited, and there is a stability problem of high valence state americium. Another method for separation of americium and curium is directly solvent extraction. While the extractants used in the existing reports not only have low separation factors for americium and curium, but also have poor compatibility with the existed trivalent actinide lanthanide separation processes, which complicates the whole production chain.

In summary, there is currently a problem of low separation factor when using solvent extraction method to separate americium-curium, especially the existing trivalent actinide lanthanide separation and americium-curium separation is often carried out in a different system, resulting in the complexation of the process.

### SUMMARY OF THE INVENTION

The purpose of the present invention is to provide an integrated method and system for trivalent actinides and lanthanides separation and trivalent actinides mutual separation. This method significantly improves the separation factor of americium and curium and the operating pH value of the system, as well as the stability of the dithiophosphinic acid extractant. And thus, simultaneously achieves the separation of trivalent actinide and lanthanide, and the mutual separation of trivalent actinides, through extraction and stepwise stripping in the same system, thereby simplifying the separation process and improving the separation efficiency.

The technical program of the present invention is as follows: an integrated method for trivalent actinides and lanthanides separation and trivalent actinides mutual separation, comprising:
(1) a water soluble complexing agent was added to a solution containing trivalent lanthanides and actinides, and adjust the pH value of the solution to an appropriate value, wherein the actinides include americium ions and curium ions; and then the solution is contacted with the organic phase of extractant containing alkyl or aryl dithiophosphonic acid and nitrogen-containing reagent to extract actinide ions into the organic phase, and the loaded organic phase containing actinide ions was washed by an aqueous phase within a certain pH value range;
(2) the loaded organic phase is stripped with an aqueous phase within a certain pH value range, and the curium ion is stripped into the aqueous phase to achieve the separation of americium and curium;
(3) the organic phase is brought into contact with a dilute nitric acid solution, and the americium ions in the organic phase are back-extracted into the aqueous phase.

Furthermore, the integrated method for trivalent actinides and lanthanides separation and trivalent actinides mutual separation as described above, wherein the water soluble complexing agent is N,N-dimethyl-3-oxa-pentanamide acid or N,N-diethyl-3-oxa-pentanamide acid with a concentration of 5-10 mM.

Furthermore, the integrated method for trivalent actinides and lanthanides separation and trivalent actinides mutual separation as described above, wherein the alkyl or aryl dithiophosphonic acid may be one of di(2,4,4-trimethylpentyl) dithiophosphonic acid, chlorophenyl dithiophosphonic acid, or di(tert-butylphenyl) dithiophosphonic acid.

Furthermore, the integrated method for trivalent actinides and lanthanides separation and trivalent actinides mutual separation as described above, wherein the nitrogen-containing reagent is an aromatic ring reagent containing nitrogen atoms, which can be one of bipyridine, o-phenanthroline or 4,4'-di-tert-butyl-2,2'-bipyridine; and the addition of nitrogen-containing reagent significantly increases the separation factor of americium and curium, and decreases the operating pH value of the system.

Furthermore, the integrated method for trivalent actinides and lanthanides separation and trivalent actinides mutual separation as described above, wherein the extractant contains 0.2M-0.5M alkyl or aryl dithiophosphonic acid and 10mM~100mM nitrogen-containing reagent.

Furthermore, the integrated method for trivalent actinides and lanthanides separation and trivalent actinides mutual separation as described above, wherein the solvent of the organic phase of the extractant is one of kerosene, benzene, xylene or diisopropylbenzene.

Furthermore, the integrated method for trivalent actinides and lanthanides separation and trivalent actinides mutual separation as described above, in step (1), the pH value of the solution containing trivalent lanthanide and actinide ions is adjusted to 2.6-3.0 by adding nitric acid.

Furthermore, the integrated method for trivalent actinides and lanthanides separation and trivalent actinides mutual separation as described above, in step (1), the pH value range of the aqueous phase for washing the loaded organic phase is 2.6 to 3.0; and in step (2), the pH range of the aqueous phase for stripping of curium ions is 2.3-2.5; and in step (3), the nitric acid concentration is 0.5M-1.0M.

An integrated system for trivalent lanthanides and actinides separation and trivalent actinides mutual separation for implementing the method described above, comprising in sequence, an actinide-lanthanide separation section, a washing section, a curium stripping section and an americium stripping section,
in the actinide-lanthanide separation section, an water soluble complexing agent is added to a solution containing trivalent lanthanides and actinides, and then the solution is countercurrent contacted with the organic phase of an extractant containing alkyl or aryl dithiophosphonic acid and nitrogen-containing reagent to extract actinide ions into the organic phase; and
in the washing section, an aqueous phase with a certain pH value range is used to wash the loaded organic phase containing actinide ions;
in the curium stripping section, the loaded organic phase contacts with the aqueous phase of a certain pH value range countercurrent, and the curium ions are stripped into the aqueous phase to achieve the separation of americium and curium;
in the americium stripping section, the organic phase is in countercurrent contacted with a dilute nitric acid solution, and the americium ions in the organic phase are stripped into the aqueous phase.

The beneficial effects of the invention are as follows: the integrated method and system for trivalent actinides and lanthanides separation and trivalent actinides mutual separation provided by the invention adopts the addition of small molecule amide acid complexing agents, alkyl or aryl dithiophosphonic acid reagents, and nitrogen-containing synergistic agents to the aqueous phase for simultaneous separation. The separation factor of americium and curium can be increased from 3 to about 9, and the extraction stage can be significantly reduced when the trivalent americium and curium separation process is implemented. In term of process design, the trivalent actinides and lanthanides are separated firstly by using alkyl or aryl dithiophosphonic acid reagent and nitrogen-containing synergistic extractant system, and then the curium and americium are separated by stepwise back extraction, so that both the trivalent actinides and lanthanides separation and trivalent americium and curium separation are carried out in the same system, and the process is relatively simple. Compared with the process using alkyl or aryl dithiocarbamate reagents alone, the pH value of the separation of trivalent actinides and lanthanides is around 2.6-3.0, and the pH value of the separation of trivalent americium and curium is about 2.3-2.5, which makes the process easier to control. In addition to greatly simplifying the separation process, due to the synergistic extraction effect of nitrogen based polycyclic ligands in the present invention, the operating acidity of the separation system can be reduced by about 1 pH unit compared to the existing processes, making the process more stable.

### BRIEF DESCRIPTION OF THE DRAWINGS

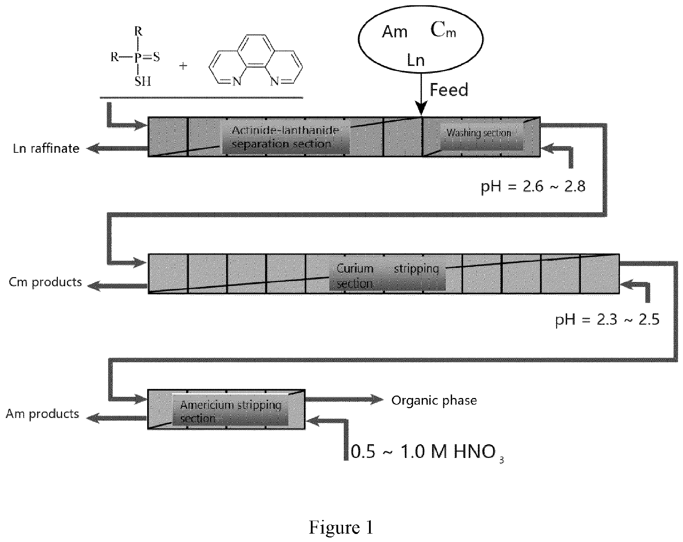

Figure 1 shows a schematic diagram of an integrated process for trivalent actinides and lanthanides separation and trivalent actinides mutual separation in a specific embodiment of the present invention.

### DETAILED DESCRIPTION OF THE INVENTION

In order to make the purpose, technical solutions and advantages of the present invention clearer and more understandable, the present invention is further described in detail combines the accompanying drawings and embodiments. It should be understood that the specific embodiments described herein are only for the purpose of explaining the present invention, and are not intended to limit the present invention.

As shown in FIG. 1, the present invention provides an integrated method and system for trivalent actinides and lanthanides separation and trivalent actinides mutual separation, which sequentially comprises an actinide-lanthanide separation section, a washing section, a curium stripping section and an americium stripping section.

In the actinide-lanthanide separation section, the solution containing trivalent lanthanide and actinide ions is brought into countercurrent contact with the organic phase of extractant containing alkyl or aryl dithiophosphonic acid and nitrogen-containing reagent, and actinide ions are extracted into the organic phase. In detail, the solution containing trivalent lanthanide and actinide ions is added with a water soluble ligand (such as N, N-dimethyl-3-oxa-pentanamide acid or N, N-diethyl-3-oxa-pentanamide acid), and the concentration of the water soluble ligand is 5-10 mM, and then the pH value is adjusted to 2.6-3.0 by adding nitric acid. The extractant contains 0.2M-0.5M alkyl or aryl dithiophosphonic acid and 10mM~100mM nitrogen-containing reagent; wherein the alkyl or aryl dithiophosphonic acid can be one of di (2,4,4-trimethylpentyl) dithiophosphonic acid, chlorophenyl dithiophosphonic acid or di(tert-butylphenyl) dithiophosphonic acid; and the nitrogen-containing reagent is an aromatic ring reagent containing nitrogen atom, which can be one of bipyridine, o-phenanthroline or 4,4'-di-tert-butyl-2,2'-bipyridine. The addition of small molecule complexes containing oxygen hard ligands in the aqueous phase and nitrogen-containing reagents in the organic phase can significantly improve the separation factor of actinides and reduce the operating pH value of the system. The solvent for the organic phase of the extractant is one of kerosene, benzene, xylene or diisopropylbenzene.

In the washing section, an aqueous phase with a certain pH value range is used to wash the loaded organic phase containing actinides. The pH value range of the aqueous phase for washing the loaded organic phase is 2.6-3.0.

In the curium stripping section, the loaded organic phase contacts with the countercurrent aqueous phase of a certain pH value range, and the curium ions are back-extracted into the aqueous phase to achieve the separation of americium and curium. The pH value range of the aqueous phase for back-extracting curium ion is 2.3-2.5.

In the americium stripping section, the organic phase contacts with dilute nitric acid solution, and the americium ions in the organic phase are back-extracted into the aqueous phase. The concentration of nitric acid is 0.5M-1.0M.

### Example 1

Prepare a solution containing trivalent americium, curium and lanthanide Eu. The concentration of americium and curium is about 5kBq/L, and the concentration of Eu is about 15 g/L. Add 5 mM water soluble N, N-diethyl-3-oxa-pentanamide acid, and then adjust the pH of the obtained solution to about 2.7. In the actinides-lanthanides separation section, the organic phase is xylene with 15% saponification of 0.5M di (tert-butylphenyl) dithiophosphonic acid - 40 mM bipyridine. After 7-stage of extraction and 2-stage of washing, the organic phase contains 99.9% americium and curium, and the Eu content is less than 0.1%. The aqueous outlet is mainly Eu. The organic phase enters the curium stripping section, wherein the stripping solution used is dilute nitric acid solution with a pH of about 2.3. After about 8 stages of stripping, the outlet aqueous phase obtained is a solution containing curium. The organic phase further enters the americium stripping section, and the stripping solution is 0.5M HNO₃. After two-stage stripping, the americium containing solution is obtained.

### Example 2

Prepare a solution containing trivalent americium, curium and lanthanide Eu. The concentration of americium and curium is about 10 kBq/L, and the concentration of Eu is about 20 g/L. Add 5 mM water soluble complexing agent N, N-dimethyl-3-oxa-pentanamide acid, and then adjust the pH of the obtained solution to about 2.8. In the actinides-lanthanides separation section, the organic phase is a 16% saponification solution of 0.5M di(2,4,4-trimethylpentyl) dithiophosphonic acid-100 mM di-tert-butyl-2,2'-bipyridine in diisopropylbenzene. After 6-stage extraction and 2-stage washing, the organic phase contains 99.9% americium and curium, and the lanthanide content is less than 0.1%. The outlet aqueous phase is mainly lanthanide. The organic phase enters the curium stripping section, wherein the stripping solution used is dilute nitric acid solution with a pH of about 2.2. After about 10 stages of stripping, the outlet water phase obtained is the solution containing curium. The organic phase further enters the americium stripping section, and the stripping solution is 0.6 M HNO₃. After two-stage stripping, the americium containing solution is obtained.

Other embodiments of the present invention will readily come to mind to those skilled in the art upon consideration of the specification and practice of the invention disclosed herein. This application is intended to cover any variations, uses, or adaptations of the present invention which follow the general principles of the invention and include means of common knowledge or practice in the art not disclosed herein. In this way, to the extent that such variations, uses or adaptations of the present invention fall within the scope of the claims of the present invention and their technical equivalents, the present invention is intended to encompass such variations and adaptations.

The foregoing embodiments are merely illustrative of the present invention, which may be practiced in other specific ways or in other specific forms without departing from the gist or essential features of the invention. Accordingly, the described embodiments are to be regarded as illustrative and not limiting in any respect. The scope of the invention shall be indicated by the additional claims, and any variations equivalent to the intent and scope of the claims shall also be included within the scope of the invention.

## Claims

1. An integrated method for trivalent actinides and lanthanides separation and trivalent actinides mutual separation, **characterized by** comprising:
(1) a water soluble complexing agent was added to a solution containing trivalent lanthanides and actinides, and adjust the pH value of the solution to an appropriate value, wherein the actinides include americium ions and curium ions; and then the solution is contacted with the organic phase of extractant containing alkyl or aryl dithiophosphonic acid and nitrogen-containing reagent to extract actinide ions into the organic phase, and the loaded organic phase containing actinide ions was washed by an aqueous phase within a certain pH value range;
(2) the loaded organic phase is stripped with an aqueous phase within a certain pH value range, and the curium ion is stripped into the aqueous phase to achieve the separation of americium and curium;
(3) the organic phase is brought into contact with a dilute nitric acid solution, and the americium ions in the organic phase are back-extracted into the aqueous phase.

2. The integrated method for trivalent actinides and lanthanides separation and trivalent actinides mutual separation as claimed in claim 1, wherein the water soluble complexing agent is N,N-dimethyl-3-oxa-pentanamide acid or N,N-diethyl-3-oxa-pentanamide acid with a concentration of 5-10 mM.

3. The integrated method for trivalent actinides and lanthanides separation and trivalent actinides mutual separation as claimed in claim 1, wherein the alkyl or aryl dithiophosphonic acid may be one of di(2,4,4-trimethylpentyl) dithiophosphonic acid, chlorophenyl dithiophosphonic acid, or di(tert-butylphenyl) dithiophosphonic acid.

4. The integrated method for trivalent actinides and lanthanides separation and trivalent actinides mutual separation as claimed in claim 1, wherein the nitrogen-containing reagent is an aromatic ring reagent containing nitrogen atoms, which can be one of bipyridine, o-phenanthroline or 4,4'-di-tert-butyl-2,2'-bipyridine.

5. The integrated method for trivalent actinides and lanthanides separation and trivalent actinides mutual separation as claimed in claim 1, wherein the extractant contains 0.2M-0.5M alkyl or aryl dithiophosphonic acid and 10mM~100mM nitrogen-containing reagent.

6. The integrated method for trivalent actinides and lanthanides separation and trivalent actinides mutual separation as claimed in claim 1, wherein the solvent of the organic phase of the extractant is one of kerosene, benzene, xylene or diisopropylbenzene.

7. The integrated method for trivalent actinides and lanthanides separation and trivalent actinides mutual separation as claimed in claim 1, in step (1), the pH value of the solution containing trivalent lanthanide and actinide ions is adjusted to 2.6-3.0 by adding nitric acid.

8. The integrated method for trivalent actinides and lanthanides separation and trivalent actinides mutual separation according to any one of claims 1-7, in step (1), the pH value range of the aqueous phase for washing the loaded organic phase is 2.6 to 3.0; and in step (2), the pH range of the aqueous phase for the reverse extraction of curium ions is 2.3-2.5; and in step (3), the nitric acid concentration is 0.5M-1.0M.

9. An integrated system for trivalent lanthanides and actinides separation and trivalent actinides mutual separation for implementing the method claimed in any one of claims 1-8, **characterized by** comprising in sequence, an actinide-lanthanide separation section, a washing section, a curium stripping section and an americium stripping section,
in the actinide-lanthanide separation section, an water soluble complexing agent is added to a solution containing trivalent lanthanides and actinides, and then the solution is countercurrent contacted with the organic phase of an extractant containing alkyl or aryl dithiophosphonic acid and nitrogen-containing reagent to extract actinide ions into the organic phase; and
in the washing section, an aqueous phase with a certain pH value range is used to wash the loaded organic phase containing actinide ions;
in the curium stripping section, the loaded organic phase contacts with the aqueous phase of a certain pH value range countercurrent, and the curium ions are stripped into the aqueous phase to achieve the separation of americium and curium;
in the americium stripping section, the organic phase is in countercurrent contacted with a dilute nitric acid solution, and the americium ions in the organic phase are stripped into the aqueous phase.
